# EUROPEAN PATENT APPLICATION

(11) **EP 4 797 664 A1**
(43) Date of publication of application: **26.08.2026**
(21) Application number: 26157491.7
(22) Date of filing: 10.02.2026
(51) Int. Cl.: H04L 69/22, H04L 45/745

(54) **COST-BASED SELECTION OF CROSS-FIELD SUMMARIZATION LABELS**

(30) Priority: 24.02.2025 US 202519061099
(71) Applicant: Arista Networks, Inc., Santa Clara, CA 95054 (US)
(72) Inventor: YOUSUF, Muhammad Khalid, San Jose, CA (US); PADUVALLI, Ramakrishna, Saratoga, CA (US); LAGISETTY, Venkata Vyshna, Bengaluru (IN); CHEN, Michael, Palo Alto, CA (US)
(74) Representative: Hoffmann Eitle

(57) **Abstract**

Techniques for performing cost-based selection of cross-field summarization labels are provided. In certain embodiments, these techniques enable a network device to implement cross-field summarization in a manner that minimizes the number of ternary content-addressable memory (TCAM) entries needed for a traffic policy, specifically in cases where the network device's cross-field label lookup table cannot hold all of the cross-field summarization labels created for that policy.

## Description

### BACKGROUND

A network traffic policy (hereinafter simply "traffic policy") is a set of rules that governs how network devices like switches and routers handle inbound and/or outbound network traffic (i.e., packets). Each rule in a traffic policy includes one or more field lists (where each field list specifies one or more match patterns for a packet header field) and one or more actions. When a packet enters or exits a network device at an interface that is configured with an inbound or outbound traffic policy, the packet is evaluated against the traffic policy's rules to identify the highest priority rule whose field lists match the packet's header. The actions included in the identified (i.e., matched) rule are then executed on the packet.

Traditionally, traffic policy rules are programmed into a network device's ternary content-addressable memory (TCAM) in a manner that causes each unique combination of match patterns across the field lists of each rule (referred to as a cross-field match pattern combination) to consume one entry in the TCAM. With this traditional approach, if a user attempts to configure a traffic policy that comprises a large number of cross-field match pattern combinations, the TCAM may not have sufficient capacity to accommodate the entire policy.

To address this, some network devices employ optimizations that are designed to reduce the number of TCAM entries needed for traffic policies. One such optimization, called cross-field summarization, involves leveraging a hardware lookup table separate from the TCAM, referred to as a cross-field label lookup table, to hold labels that allow multiple cross-field match pattern combinations to be programmed into the TCAM using a single TCAM entry. However, existing techniques for implementing cross-field summarization can produce sub-optimal results (or in other words, results that fail to reduce TCAM usage to the extent possible) in scenarios where the size of the cross-field label lookup table is a limiting factor.

### BRIEF DESCRIPTION OF THE DRAWINGS

With respect to the discussion to follow and in particular to the drawings, it is stressed that the particulars shown represent examples for purposes of illustrative discussion and are presented in the cause of providing a description of principles and conceptual aspects of the present disclosure. In this regard, no attempt is made to show implementation details beyond what is needed for a fundamental understanding of the present disclosure. The discussion to follow, in conjunction with the drawings, makes apparent to those of skill in the art how embodiments in accordance with the present disclosure may be practiced. Similar or same reference numbers may be used to identify or otherwise refer to similar or same elements in the various drawings and supporting descriptions. In the accompanying drawings:
FIG. 1 depicts an example network device.
FIG. 2 depicts a modified version of a rules compiler in accordance with certain embodiments of the present disclosure.
FIG. 3 depicts a cross-field summarization workflow that implements cost-based label selection in accordance with certain embodiments of the present disclosure.

### DETAILED DESCRIPTION

In the following description, for purposes of explanation, numerous examples and details are set forth in order to provide an understanding of embodiments of the present disclosure. Particular embodiments as expressed in the claims may include some or all of the features in these examples, alone or in combination with other features described below, and may further include modifications and equivalents of the features and concepts described herein.

Embodiments of the present disclosure are directed to techniques for performing cost-based selection of cross-field summarization labels. As explained below, these techniques enable a network device to implement cross-field summarization in a manner that minimizes the number of TCAM entries needed for a traffic policy, specifically in cases where the network device's cross-field label lookup table cannot hold all of the cross-field summarization labels created for that policy.

### 1. Example Network Device

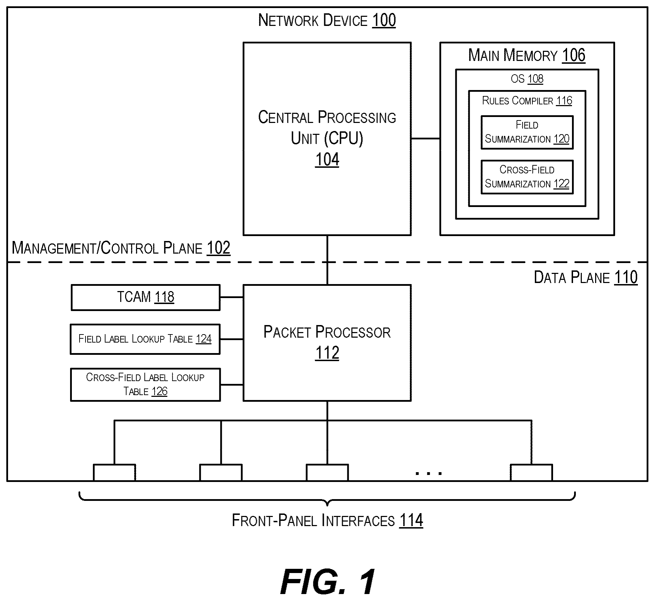

FIG. 1 is a simplified block diagram of an example network device 100 (e.g., switch, router, etc.) in which the techniques of the present disclosure may be implemented. As shown, network device 100 includes a management/control plane 102 comprising a central processing unit (CPU) 104 and a main memory (e.g., random-access memory or RAM) 106. CPU 104 is a general-purpose processor that is responsible for managing the configuration/operation of network device 100 and controlling the device's understanding of the network in which it resides. CPU 104 carries out these functions under the direction of an operating system (OS) 108 that runs on CPU 104 from main memory 106.

Network device 100 also includes a data plane 110 comprising a packet processor 112 and a set of front-panel interfaces (i.e., ports) 114. Packet processor 112 is typically an integrated circuit, such as an application-specific integrated circuit (ASIC) or a field-programmable gate array (FPGA), that is responsible for performing line-speed processing of network traffic that passes through network device 100 via front-panel interfaces 114. This line-speed processing includes, among other things, the enforcement of traffic policies that are configured on network device 100.

### 1.1 Traffic policies

A traffic policy is a set of rules that govern how packet processor 112 should handle packets that are received or sent out on a front-panel interface 114, where each rule includes one or more field lists and one or more actions. Each field list specifies one or more match patterns for a packet header field such as source IP address, destination IP address, source port, destination port, or protocol. Each action indicates an operation to be carried out on packets that "match" the rule by virtue of matching all field lists of the rule. For example, the following is a sample traffic policy comprising two rules R1 and R2 that may be configured for inbound traffic on a particular front-panel interface 114 of network device 100 (e.g., interface 114(1)). These rules are presented in priority order, such that rule R1 is evaluated before rule R2.

**Table 1**

| **Rule** | **Field List(s)** | **Action(s)** |
|---|---|---|
| R1 | Source IP: 4.1.1.1/32, 8.1.1.1/32, 16.1.1.1/32, 32.1.1.1/32 | Permit |
| | Destination IP: 10.0.0.0/16 | |
| R2 | Source IP: 4.1.1.1/32, 16.1.1.1/32 | Deny |
| | Destination IP: 11.0.0.0/16, 12.0.0.0/16 | |

With this traffic policy in place, upon receiving an inbound packet via front-panel interface 114(1), packet processor 112 will first determine whether the packet matches rule R1, which comprises checking whether the packet's source IP address matches any of the match patterns specified in the source IP field list of R1 and checking whether the packet's destination IP address matches any of the match patterns specified in the destination IP field list of R1. If the answer is yes (i.e., the packet's source and destination IP addresses match rule R1's source and destination IP field lists respectively), packet processor 112 will execute the "permit" action of R1 on the packet, or in other words allow the packet to be forwarded to its destination.

If the answer is no (i.e., the packet's source and destination IP addresses do not match rule R1's source and destination IP field lists respectively), packet processor 112 will proceed to determine whether the packet matches rule R2, which comprises checking whether the packet's source IP address matches any of the match patterns specified in the source IP field list of R2 and checking whether the packet's destination IP address matches any of the match patterns specified in the destination IP field list of R2. If the answer is yes, packet processor 112 will execute the "deny" action of rule R2 on the packet, or in other words prevent the packet from being forwarded to its destination.

### 1.2 Field summarization and cross-field summarization

To enable packet processor 112 to enforce the traffic policies configured on network device 100 at line speed, a rules compiler 116 that is part of OS 108 programs the rules of those policies into a TCAM 118 residing in the device's data plane 110. As known in the art, a TCAM is a type of high-speed memory that allows fast, parallel searching of its contents.

One traditional approach for carrying out this programming involves creating a separate TCAM entry for each unique combination of match patterns across the field lists of each traffic policy rule. For example, with respect to the traffic policy of Table 1, the traditional approach would result in the following TCAM entries:

**Table 2**

| **Source IP** | **Destination IP** | **Action** |
|---|---|---|
| 4.1.1.1/32 | 10.0.0.0/16 | Permit |
| 8.1.1.1/32 | 10.0.0.0/16 | Permit |
| 16.1.1.1/32 | 10.0.0.0/16 | Permit |
| 32.1.1.1/32 | 10.0.0.0/16 | Permit |
| 4.1.1.1/32 | 11.0.0.0/16 | Deny |
| 16.1.1.1/32 | 11.0.0.0/16 | Deny |
| 4.1.1.1/32 | 12.0.0.0/16 | Deny |
| 16.1.1.1/32 | 12.0.0.0/16 | Deny |

As shown above, rule R1 is programmed using four separate TCAM entries because there are four cross-field match pattern combinations for R1: (source IP=4.1.1.1/32, destination IP=10.0.0.0/16), (source IP=8.1.1.1/32, destination IP=10.0.0.0/16), (source IP=16.1.1.1/32, destination IP=10.0.0.0/16), and (source IP=32.1.1.1/32, destination IP=10.0.0.0/16). Similarly, rule R2 is programmed as four separate TCAM entries because there are four cross-field match pattern combinations for R2: (source IP=4.1.1.1/32, destination IP=11.0.0.0/16), (source IP=16.1.1.1/32, destination IP=11.0.0.0/16), (source IP=4.1.1.1/32, destination IP=12.0.0.0/16), and (source IP=16.1.1.1/32, destination IP=12.0.0.0/16).

The problem with the traditional approach above is that it often creates a large number of TCAM entries (due to the need for a separate entry for each cross-field match pattern combination per rule) while TCAM 118 is typically small in size (due to its high cost). Thus, in many cases, TCAM 118 will not be large enough to accommodate all of the TCAM entries needed for the traffic policy rules configured on network device 100.

To address this problem, rules compiler 116 implements two optimizations known as field summarization (shown via reference numeral 120) and cross-field summarization (shown via reference numeral 122). Field summarization generally involves (1) summarizing, for each packet header field F that appears in a traffic policy, groups of match patterns that are specified in the field list for F in the policy's rules into labels (referred to as field summarization labels), (2) programming mappings between the match pattern groups and their respective field summarization labels into a field label lookup table 124 coupled with packet processor 112, and (3) programming entries into TCAM 118 based on the field summarization labels (rather than the individual match patterns). This reduces the number of TCAM entries needed for the traffic policy because multiple match patterns per packet header field can be consolidated into a field summarization label (and thus, a single TCAM entry).

Cross-field summarization builds upon field summarization and allows for further TCAM usage reduction in scenarios where some or all of the rules in a traffic policy include the same set of multiple packet header fields (i.e., field list types), such as both a source IP field list and a destination IP field list (like the traffic policy of Table 1 above), or both a source port field list and a destination port field list. At a high level, cross-field summarization works as follows (this description assumes that the cross-field summarization is performed with respect to a set of N packet header fields F1-FN used by the rules of a traffic policy):
1. For each field F1 through FN, generate and assign one or more sets of field summarization labels (referred to as field label sets) to the rules of the traffic policy via field summarization
2. For each rule, compute the cross product of the rule's field label sets, resulting in a set of label tuples where the first element in each tuple is from the field label set for field F1, the second element in each tuple is from the field label set for field F2, and so on
3. Add each unique label tuple (across all rules of the traffic policy) to a grouping, referred to as a field term group (FTG), that is identified by the rule(s) to which the label tuple is assigned
4. Assign to each FTG a unique cross-field summarization label
5. For each unique label tuple, program an entry into a cross-field label lookup table 126 coupled with packet processor 112 that maps that label tuple to the cross-field summarization label of the FTG to which the label tuple belongs
6. For each label tuple of each rule, program an entry into TCAM 118 that includes the cross-field summarization label of the label tuple's FTG and the rule's action(s) (note that if multiple label tuples of a given rule are mapped to the same cross-field summarization label, only a single TCAM entry is needed for those multiple label tuples)

To provide a concrete example of this cross-field summarization workflow, consider a traffic policy that includes three rules R1, R2, and R3 where:
- R1 includes a source IP field list with two match patterns that are assigned the field summarization labels 1 and 2, a destination IP field list with two match patterns that are assigned the field summarization labels 4 and 5, and an action aR1
- R2 includes a source IP field list with two match patterns that are assigned the field summarization labels 1 and 2, a destination IP field list with two match patterns that are assigned the field summarization labels 4 and 10, and an action aR2
- R3 includes a source IP field list with a single match pattern that is assigned the field summarization label 20 and an action aR3

In this scenario, at step (2) of the workflow, the following sets of label tuples (pairs) will be created for rules R1 and R2:
- R1: (1, 4), (1, 5), (2, 4), and (2, 5)
- R2: (1, 4), (1, 10), (2, 4), and (2, 10)

At step (3), label pairs (1, 4) and (2, 4) will be added to a field term group called FTG(R1, R2) (because these label pairs are assigned to both rules R1 and R2); label pairs (1, 5) and (2, 5) will be added to a field term group called FTG(R1) (because these label pairs are assigned only to rule R1); and label pairs (1, 10) and (2, 10) will be added to a field term group called FTG(R2) (because these label pairs are assigned only to rule R2).

At step (4), the FTGs will be assigned cross-field summarization labels as follows (note that the specific labels shown here are examples and can be substituted with other values):

**Table 3**

| **Field Term Group** | **Cross-Field Summarization Label** |
|---|---|
| FTG(R1, R2) | 100 |
| FTG(R1) | 101 |
| FTG(R2) | 102 |

At step (5), cross-field label lookup table 126 will be populated as follows:

**Table 4**

| **Source IP Label** | **Destination IP Label** | **Cross-Field Summarization Label** |
|---|---|---|
| 1 | 4 | 100 |
| 1 | 5 | 101 |
| 2 | 4 | 100 |
| 2 | 5 | 101 |
| 1 | 10 | 102 |
| 2 | 10 | 102 |

Finally, at step (6), TCAM 118 will be populated as follows:

**Table 5**

| **Source IP** | **Destination IP** | **Cross-Field Summarization Label** | **Action** |
|---|---|---|---|
| x | x | 100 | aR1 |
| x | x | 101 | aR1 |
| x | x | 100 | aR2 |
| x | x | 102 | aR2 |
| 20 | x | x | aR3 |

### 2. Solution Overview

One issue with cross-field summarization is that, in many cases, cross-field label lookup table 126 will not be large enough to accommodate all of the entries that need to be programmed into the table at step (5) above. This is because the number of unique label tuples (which are created by computing the cross-product of field label sets) will typically be very large, while cross-field label lookup table 126 (which is a hardware lookup table) is limited in size. In such cases, any cross-field summarization label that cannot be mapped via cross-field label lookup table 126 will not be programmed into TCAM 118. Instead, every label tuple (of every rule) associated with that cross-field summarization label will be programmed as a separate entry in the TCAM, potentially resulting in sub-optimal TCAM utilization.

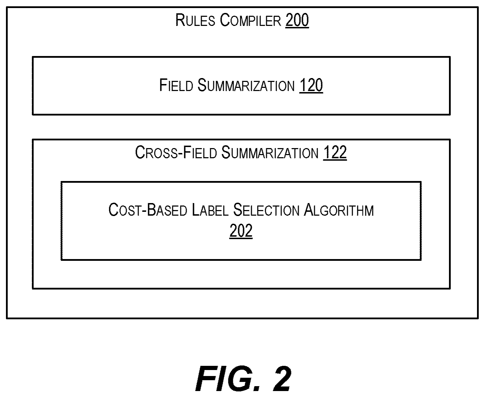

To mitigate this issue, FIG. 2 depicts an enhanced version 200 of rules compiler 116 that includes, within its cross-field summarization component 122, a novel cost-based label selection algorithm 202 according to certain embodiments. In these embodiments, algorithm 202 is implemented in software (i.e., program code) that runs on CPU 104 of network device 100 from the device's main memory 106.

At a high level, cost-based label selection algorithm 202 enables rules compiler 200 to rank, as part of the cross-field summarization process, the rules of a traffic policy according to the degree of TCAM usage reduction achieved if the cross-field summarization labels associated with that rule are used (i.e., programmed into cross-field label lookup table 126), and prioritize the programming of the cross-field summarization labels of the highest-rank rules into cross-field label lookup table 126. Thus, with algorithm 202, rules compiler 200 can advantageously ensure that TCAM 118 is used optimally in scenarios where cross-field label lookup table 126 cannot hold all of the cross-field summarization labels for a traffic policy, because the labels that result in the most TCAM usage reduction (on a per rule basis) will be programmed into table 126 first. For any cross-field summarization label that does not end up fitting in cross-field label lookup table 126 via this method, the label tuples associated with that label can be directly programmed as separate entries into TCAM 118.

It should be appreciated that FIGS. 1 and 2 and the foregoing high-level solution description are illustrative and not intended to limit embodiments of the present disclosure. For example, although FIG. 1 depicts a particular arrangement of components in network device 100, other arrangements are possible (e.g., the functionality attributed to a particular component may be split into multiple components, components may be combined, etc.). One of ordinary skill in the art will recognize other similar modifications, variations, and alternatives.

### 3. Cross-Field Summarization with Cost-Based Label Selection

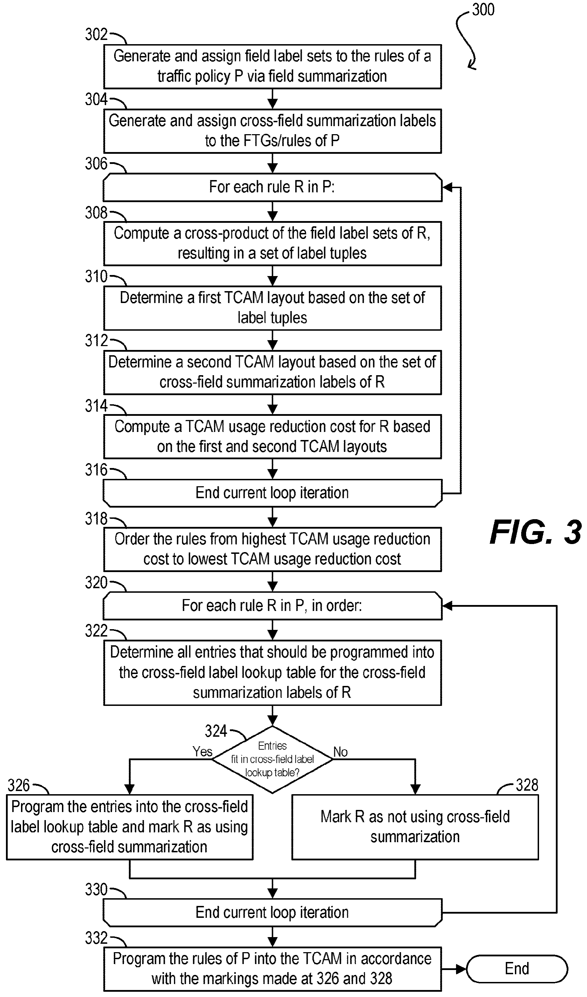

FIG. 3 depicts an example workflow 300 that may be executed by rules compiler 200 of FIG. 2 for carrying out cross-field summarization with respect to a traffic policy P in accordance with cost-based label selection algorithm 202. Workflow 300 can be understood as a modified version of the cross-field summarization workflow described in section 1.2 that employs algorithm 202 to determine which cross-field summarization labels should be prioritized for programming into cross-field label lookup table 126. As with that previous workflow, workflow 300 assumes that cross-field summarization is performed with respect to a set of N packet header fields F1-FN used by the rules of policy P. For example, fields F1-FN can include a combination of source IP address and destination IP address or a combination of source port and destination port.

Starting with step 302, rules compiler 200 can generate and assign one or more sets of field summarization labels (i.e., field label sets) to the rules of policy P via field summarization.

At step 304, rules compiler 200 can generate and assign cross-field summarization labels to the FTGs (and thus, rules) of policy P, in accordance with steps (2)-(4) of the cross-field summarization workflow of section 1.2.

At step 306, rules compiler 200 can enter a first loop for each rule R in policy P. Within the first loop, rules compiler 200 can compute the cross product of the field label sets of rule R, resulting in a set of label tuples (step 308), and can determine a first TCAM layout based on this set of label tuples (which comprises the TCAM entries that should be programmed into TCAM 118 for implementing rule R using the label tuples) (step 310).

In addition, rules compiler 200 can determine a second TCAM layout based on the cross-field summarization labels of rule R (which comprises the TCAM entries that should be programmed into TCAM 118 for implementing rule R using the labels) (step 312) and can compute a TCAM usage reduction cost for R based on the first and second TCAM layouts (step 314). This TCAM usage reduction cost can be understood as the degree to which the cross-field summarization label set of rule R would reduce consumption in TCAM 118 if that label set is used. In one set of embodiments, the computation at step 314 can involve (1) computing a field label cost by multiplying the number of TCAM entries in the first TCAM layout by the number of other match patterns specified in rule R that are not part of fields F1-FN (if any), (2) computing a cross-field label cost by multiplying the number of TCAM entries in the second TCAM layout by the number of other match patterns, and (3) subtracting the cross-field label cost from the field label cost.

At step 316, rules compiler 200 can reach the end of the current loop iteration and return to the top of the first loop to process the next rule.

Upon processing all rules in policy P, rules compiler 200 can order the rules from highest TCAM usage reduction cost to lowest TCAM reduction cost (step 318) and can enter a second loop for each rule R in policy P, in order (step 320). Within this second loop, rules compiler 200 can determine all of the entries that should be programmed into cross-field label lookup table 126 for the cross-field summarization label set of rule R (step 322). Rules compiler 200 can then check whether the lookup table entries determined at step 322 fit into table 126 (step 324).

If the answer is yes, rules compiler 200 can program those entries into cross-field label lookup table 126 and mark rule R as using cross-field summarization (step 326). Alternatively, if the answer is no, rules compiler 200 can mark rule R as not using cross-field summarization (step 328). Rules compiler 200 can subsequently reach the end of the current loop iteration (step 330) and return to the top of the second loop to process the next rule.

Finally, upon completing the second loop, rules compiler 200 can program the rules of policy P into TCAM 118 in accordance with the markings made at steps 326 and 328 (step 332) and workflow 300 can end. More specifically, if a given rule was marked as using cross-field summarization at step 326, rules compiler 200 can program entries into TCAM 118 that are based on the cross-field summarization labels for that rule (note that such labels will be present in cross-field label lookup table 126). However, if a given rule was marked as not using cross-field summarization at step 328, rules compiler 200 can program entries into TCAM 118 that are based on the field summarization label tuples determined for that rule, rather than the rule's cross-field summarization labels.

To provide a concrete example of workflow 300, consider a traffic policy that includes three rules R1, R2, and R3 where:
- R1 includes a source IP field list with two match patterns that are assigned the field summarization labels 2 and 3 (which can be encoded in binary as 001x), a destination IP field list with four match patterns that are assigned the field summarization labels 4, 5, 6, and 14 (which can be encoded in binary as 01xx and 1110), a protocol field list with two match patterns "tcp" and "udp," and an action aR1
- R2 includes a source IP field list with three match patterns that are assigned the field summarization labels 2, 3, and 11 (which can be encoded in binary as 001x and 1011), a destination IP field list with two match patterns that are assigned the field summarization labels 4 and 10 (which can be encoded in binary as 0100 and 1010), a protocol field list with three match patterns "tcp," "udp," and "icmp," and an action aR2
- R3 includes a source IP field list with a single match pattern that is assigned the field summarization label 14 (which can be encoded in binary as 1110), a destination IP field list with a single match pattern that is assigned the field summarization label 15 (which can be encoded in binary as 1111), a protocol field list with the match pattern "*" (i.e., all), and an action aR3

For this traffic policy, assume that cross-field summarization is being performed with respect to the source IP and destination IP address fields (and not the protocol field).

In this scenario, at step 304 of workflow 300, the following cross-field summarization labels will be generated and assigned to the FTGs of the policy (note that the specific labels shown here are examples and can be substituted with other values):

**Table 6**

| **Cross-Field Summarization Label** | **Field Term Group** | **Label Tuples** |
|---|---|---|
| 2 | FTG(R1, R2) | (2, 4), (3, 4) |
| 3 | FTG(R1) | (2, 5), (2, 6), (2, 14), (3, 5), (3, 6), (3, 14) |
| 4 | FTG(R2) | (2, 10), (3, 10), (11, 4), (11, 10) |
| 5 | FTG(R3) | (14, 15) |

At step 310, the following first TCAM layouts will be determined for rules R1, R2, and R3 respectively using their field summarization labels (in binary format):

**Table 7 (first TCAM layout for R1)**

| **Source IP** | **Destination IP** | **Action** |
|---|---|---|
| 001x | 01xx | aR1 |
| 001x | 1110 | aR1 |

**Table 8 (first TCAM layout for R2)**

| **Source IP** | **Destination IP** | **Action** |
|---|---|---|
| 001x | 0100 | aR2 |
| 001x | 1010 | aR2 |
| 1011 | 0100 | aR2 |
| 1011 | 1010 | aR2 |

**Table 9 (first TCAM layout for R3)**

| **Source IP** | **Destination IP** | **Action** |
|---|---|---|
| 1110 | 1111 | aR3 |

At step 312, the following second TCAM layouts will be determined for rules R1, R2, and R3 respectively using their cross-field summarization labels (in binary format):

**Table 11 (second TCAM layout for R1)**

| **Cross-Field Summarization Label** | **Action** |
|---|---|
| 001x | aR1 |

**Table 12 (second TCAM layout for R2)**

| **Cross-Field Summarization Label** | **Action** |
|---|---|
| 0010 | aR2 |
| 0100 | aR2 |

**Table 13 (second TCAM layout for R3)**

| **Cross-Field Summarization Label** | **Action** |
|---|---|
| 0101 | aR3 |

At step 314, the following TCAM reduction costs will be determined for rules R1, R2, and R3:

**Table 14**

| **Rule** | **Field Label Cost** | **Cross-Field Label Cost** | **TCAM Reduction Cost** |
|---|---|---|---|
| R1 | 2 * 2 = 4 | 1 * 2 = 2 | 4 - 2 = 2 |
| R2 | 4 * 3 = 12 | 2 * 3 = 6 | 12 - 6 = 6 |
| R3 | 1 * 1 = 1 | 1 * 1 = 1 | 1 - 1 = 0 |

At the conclusion of the second loop, the following entries will be programmed into cross-field label lookup table 126 (under the assumption that the maximum capacity of this table is 12 entries). Note that the cross-field summarization labels for rule R2 are programmed first (i.e., appear at the top of the table) because R2 has the highest TCAM usage reduction cost. The cross-field summarization labels for rule R1 are programmed next because R1 has the second highest TCAM usage reduction cost. The cross-field summarization label for rule R3 is not programmed at all into table 126 because it does not fit into the table.

**Table 15**

| **Source IP Label** | **Destination IP Label** | **Cross-Field Summarization Label** |
|---|---|---|
| 1 | 4 | 2 |
| 2 | 4 | 2 |
| 1 | 10 | 4 |
| 2 | 10 | 4 |
| 11 | 4 | 4 |
| 11 | 10 | 4 |
| 1 | 5 | 3 |
| 1 | 6 | 3 |
| 1 | 14 | 3 |
| 2 | 5 | 3 |
| 2 | 6 | 3 |
| 2 | 14 | 3 |

Finally, at step 332, the following entries will be programmed into TCAM 118. For simplicity, the protocol field of the rules is not shown in the layout below.

**Table 16**

| **Source IP** | **Destination IP** | **Cross-Field Summarization Label** | **Action** |
|---|---|---|---|
| x | x | 001x | aR1 |
| x | x | 0010 | aR2 |
| x | x | 0100 | aR2 |
| 1110 | 1111 | x | aR3 |

The above description illustrates various embodiments of the present disclosure along with examples of how aspects of these embodiments may be implemented. The above examples and embodiments should not be deemed to be the only embodiments and are presented to illustrate the flexibility and advantages of the present disclosure as defined by the following claims. For example, although certain embodiments have been described with respect to particular workflows and steps, it should be apparent to those skilled in the art that the scope of the present disclosure is not strictly limited to the described workflows and steps. Steps described as sequential may be executed in parallel, order of steps may be varied, and steps may be modified, combined, added, or omitted. As another example, although certain embodiments may have been described using a particular combination of hardware and software, it should be recognized that other combinations of hardware and software are possible, and that specific operations described as being implemented in hardware can also be implemented in software and vice versa.

The specification and drawings are, accordingly, to be regarded in an illustrative rather than restrictive sense. Other arrangements, embodiments, implementations, and equivalents will be evident to those skilled in the art and may be employed without departing from the spirit and scope of the present disclosure as set forth in the following claims.

The disclosure in the application also includes the following numbered clauses:
1. A method performed by a network device for executing cost-based selection of cross-field summarization labels for a traffic policy comprising a plurality of rules, the method comprising:
   for each rule in the plurality of rules:
      computing a cross-product of a plurality of field label sets corresponding to a plurality of field lists of the rule, each field label set including one or more field summarization labels assigned to one or more match patterns specified in a field list in the plurality of field lists, the computing of the cross-product resulting in a set of field label tuples;
      determining a first ternary content-addressable memory (TCAM) layout for a TCAM of the network device based on the set of field label tuples;
      determining a second TCAM layout for the TCAM based on a set of cross-field summarization labels associated with the rule; and
      computing a TCAM usage reduction cost for the rule based on the first TCAM layout and the second TCAM layout;
   ordering the plurality of rules from highest TCAM usage reduction cost to lowest TCAM usage reduction cost; and
   for each rule in the plurality of rules, in order:
      determining one or more entries to be programmed into a cross-field label lookup table for the set of cross-field summarization labels associated with the rule;
      checking whether the one or more entries fit in the cross-field label lookup table; and
      upon determining that the one or more entries fit in the cross-field label lookup table, programming the one or more entries into the cross-field label lookup table and marking the rule as using cross-field summarization.
2. The method of clause 1 further comprising:
   upon determining that the one or more entries do not fit into the cross-field label lookup table, marking the rule as not using cross-field summarization.
3. The method of clause 2 further comprising:
   programming the plurality of rules into the TCAM, the programming of the plurality of rules comprising, for each rule:
   upon determining that the rule is marked as using cross-field summarization, programming one or more first TCAM entries into the TCAM that map the set of cross-field summarization labels associated with the rule to one or more actions included in the rule.
4. The method of clause 3 wherein the programming of the plurality of rules further comprises:
   upon determining that the rule is marked as not using cross-field summarization, programming one or more second TCAM entries into the TCAM that map one or more field summarization labels associated with the rule to the one or more actions associated with the rule.
5. The method of any preceding clause wherein the plurality of field lists of the rule include a source Internet Protocol (IP) address field list and a destination IP address field list.
6. The method of any of clauses 1 to 4, wherein the plurality of field lists of the rule include a source port field list and a destination port field list.
7. The method of any preceding clause wherein computing the TCAM usage reduction cost for the rule comprises:
   computing a field label cost based on a number of TCAM entries in the first TCAM layout;
   computing cross-field label cost based on a number of TCAM entries in the second TCAM layout; and
   subtracting the cross-field label cost from the field label cost.
8. The method of clause 7 wherein the field label cost and the cross-field label cost each takes into account one or more other field lists of the rule different from the plurality of field lists.
9. The method of any preceding clause wherein the cross-field label lookup table has insufficient capacity to hold all cross-field summarization labels of the plurality of rules.
10. A network device comprising:
   a central processing unit (CPU);
   a ternary content-addressable memory (TCAM);
   a cross-field label lookup table; and
   a memory having stored thereon program code for performing cost-based selection of cross-field summarization labels for a traffic policy comprising a plurality of rules, the program code causing the CPU to:
      for each rule in the plurality of rules:
         compute a cross-product of a plurality of field label sets corresponding to a plurality of field lists of the rule, each field label set including one or more field summarization labels assigned to one or more match patterns specified in a field list in the plurality of field lists, the computing of the cross-product resulting in a set of field label tuples;
         determine a first ternary TCAM layout for the TCAM based on the set of field label tuples;
         determine a second TCAM layout for the TCAM based on a set of cross-field summarization labels associated with the rule; and
         compute a TCAM usage reduction cost for the rule based on the first TCAM layout and the second TCAM layout;
      order the plurality of rules from highest TCAM usage reduction cost to lowest TCAM usage reduction cost; and
      for each rule in the plurality of rules, in order:
         determine one or more entries to be programmed into the cross-field label lookup table for the set of cross-field summarization labels associated with the rule;
         check whether the one or more entries fit in the cross-field label lookup table; and
         upon determining that the one or more entries fit in the cross-field label lookup table, program the one or more entries into the cross-field label lookup table and mark the rule as using cross-field summarization.
11. The network device of clause 10 wherein the program code further causes the CPU to:
   upon determining that the one or more entries do not fit into the cross-field label lookup table, mark the rule as not using cross-field summarization.
12. The network device of clause 11 wherein the program code further causes the CPU to:
   program the plurality of rules into the TCAM, the programming of the plurality of rules comprising, for each rule:
   upon determining that the rule is marked as using cross-field summarization, programming one or more first TCAM entries into the TCAM that map the set of cross-field summarization labels associated with the rule to one or more actions included in the rule.
13. The network device of clause 12 wherein the programming of the plurality of rules further comprises:
   upon determining that the rule is marked as not using cross-field summarization, programming one or more second TCAM entries into the TCAM that map one or more field summarization labels associated with the rule to the one or more actions associated with the rule.
14. The network device of any of clauses 10 to 13, wherein the plurality of field lists of the rule include a source Internet Protocol (IP) address field list and a destination IP address field list.
15. The network device of any of clauses 10 to 13, wherein the plurality of field lists of the rule include a source port field list and a destination port field list.
16. The network device of any of clauses 10 to 15, wherein computing the TCAM usage reduction cost for the rule comprises:
   computing a field label cost based on a number of TCAM entries in the first TCAM layout;
   computing cross-field label cost based on a number of TCAM entries in the second TCAM layout; and
   subtracting the cross-field label cost from the field label cost.
17. The network device of clause 16 wherein the field label cost and the cross-field label cost each takes into account one or more other field lists of the rule different from the plurality of field lists.
18. The network device of any of clauses 10 to 17, wherein the cross-field label lookup table has insufficient capacity to hold all cross-field summarization labels of the plurality of rules.
19. A method performed by a network device for executing cost-based selection of cross-field summarization labels for a traffic policy comprising a plurality of rules, the method comprising:
   for each rule in the plurality of rules:
      computing a cross-product of a plurality of field label sets corresponding to a plurality of field lists of the rule, each field label set including one or more field summarization labels assigned to one or more match patterns specified in a field list in the plurality of field lists, the computing of the cross-product resulting in a set of field label tuples;
      determining a first ternary content-addressable memory (TCAM) layout for a TCAM of the network device based on the set of field label tuples;
      determining a second TCAM layout for the TCAM based on a set of cross-field summarization labels associated with the rule; and
      computing a TCAM usage reduction cost for the rule based on the first TCAM layout and the second TCAM layout;
   ordering the plurality of rules from highest TCAM usage reduction cost to lowest TCAM usage reduction cost; and
   for each rule in the plurality of rules, in order:
      attempting to program one or more entries into a cross-field label lookup table for the set of cross-field summarization labels associated with the rule.
20. The method of clause 19 wherein the one or more entries are programmed upon determining that the one or entries fit in the cross-field label lookup table.

## Claims

1. A method performed by a network device for executing cost-based selection of cross-field summarization labels for a traffic policy comprising a plurality of rules, the method comprising:
for each rule in the plurality of rules:
computing a cross-product of a plurality of field label sets corresponding to a plurality of field lists of the rule, each field label set including one or more field summarization labels assigned to one or more match patterns specified in a field list in the plurality of field lists, the computing of the cross-product resulting in a set of field label tuples;
determining a first ternary content-addressable memory (TCAM) layout for a TCAM of the network device based on the set of field label tuples;
determining a second TCAM layout for the TCAM based on a set of cross-field summarization labels associated with the rule; and
computing a TCAM usage reduction cost for the rule based on the first TCAM layout and the second TCAM layout;
ordering the plurality of rules from highest TCAM usage reduction cost to lowest TCAM usage reduction cost; and
for each rule in the plurality of rules, in order:
attempting to program one or more entries into a cross-field label lookup table for the set of cross-field summarization labels associated with the rule.

2. The method of claim 1, wherein attempting to program one or more entries into a cross-field label lookup table for the set of cross-field summarization labels associated with the rule comprises:
determining one or more entries to be programmed into a cross-field label lookup table for the set of cross-field summarization labels associated with the rule;
checking whether the one or more entries fit in the cross-field label lookup table; and
if it is determined that the one or more entries fit in the cross-field label lookup table, programming the one or more entries into the cross-field label lookup table and marking the rule as using cross-field summarization.

3. The method of claim 2 further comprising:
if it is determined that the one or more entries do not fit into the cross-field label lookup table, marking the rule as not using cross-field summarization.

4. The method of claim 3 further comprising:
programming the plurality of rules into the TCAM, the programming of the plurality of rules comprising, for each rule:
if it is determined that the rule is marked as using cross-field summarization, programming one or more first TCAM entries into the TCAM that map the set of cross-field summarization labels associated with the rule to one or more actions included in the rule.

5. The method of claim 4 wherein the programming of the plurality of rules further comprises:
if it is determined that the rule is marked as not using cross-field summarization, programming one or more second TCAM entries into the TCAM that map one or more field summarization labels associated with the rule to the one or more actions associated with the rule.

6. The method of any of claims 2 to 5 wherein the cross-field label lookup table has insufficient capacity to hold all cross-field summarization labels of the plurality of rules.

7. The method of any preceding claim wherein the plurality of field lists of the rule include a source Internet Protocol (IP) address field list and a destination IP address field list.

8. The method of any of claims 1 to 6, wherein the plurality of field lists of the rule include a source port field list and a destination port field list.

9. The method of any preceding claim wherein computing the TCAM usage reduction cost for the rule comprises:
computing a field label cost based on a number of TCAM entries in the first TCAM layout;
computing cross-field label cost based on a number of TCAM entries in the second TCAM layout; and
subtracting the cross-field label cost from the field label cost.

10. The method of claim 9 wherein the field label cost and the cross-field label cost each takes into account one or more other field lists of the rule different from the plurality of field lists.

11. A network device comprising:
at least one central processing unit (CPU);
a ternary content-addressable memory (TCAM);
a cross-field label lookup table; and
a memory having stored therein program code for performing cost-based selection of cross-field summarization labels for a traffic policy comprising a plurality of rules, the program code, when executed by the at least one CPU, causing the at least one CPU to perform a method as set out in at least one of claims 1 to 10.

12. Program code for performing cost-based selection of cross-field summarization labels for traffic policy comprising a plurality of rules, the program code, when executed by at least one processor, causing the at least one processor to perform a method as set out in at least one of claims 1 to 10.
